# DEMANDE DE BREVET EUROPEEN

(11) **EP 1 650 678 A1**
(43) Date de publication de la demande: **26.04.2006**
(21) Numéro de dépôt: 05109877.0
(22) Date de dépôt: 24.10.2005
(51) Int. Cl.: G06F 17/30

(54) **PROCEDE D'ECHANGE D'INFORMATION ENTRE UN TERMINAL MOBILE ET UN SERVEUR**

(30) Priorité: 25.10.2004 FR 0411374
(71) Demandeur: ALCATEL, 75008 Paris (FR)
(72) Inventeur: DAURENSAN, Véronique, 92160, ANTONY (FR); MATHIEU, Guy, 91400, ORSAY (FR)
(74) Mandataire: Vigand, Régis Louis Michel

(57) **Abrégé**

L'invention concerne le domaine des procédés d'échange d'information entre un terminal mobile et un serveur.

C'est un procédé comprenant: une étape d'envoi d'un terminal mobile (1) vers un serveur (3) d'au moins une photo ; une étape d'analyse, par le serveur, de la photo envoyée ; une étape d'association, à la photo analysée, d'au moins une information relative au contenu de la photo analysée ; une étape d'envoi, vers le terminal mobile, de l'information associée à la photo ou d'au moins une partie des informations associées à la photo ; le terminal mobile fournissant au serveur une information complémentaire destinée à aider le serveur à identifier un sous-ensemble de la photo ; le serveur utilisant l'information complémentaire pour identifier un sous-ensemble de la photo.

## Description

L'invention concerne le domaine des procédés d'échange d'information entre un terminal mobile et un serveur. L'utilisateur du terminal mobile envoie la photo d'un objet à un serveur qui lui renvoie des informations relatives à l'objet. L'échange d'informations peut continuer et aboutir à une véritable communication permettant à l'utilisateur du terminal mobile de recevoir de la part du serveur des informations supplémentaires relatives à l'objet contenu dans la photo.

Selon un art antérieur décrit dans la demande de brevet chinois CN1458613, il est connu dans le domaine de la certification, un procédé d'envoi d'une photo d'une marque de certification d'un terminal mobile vers un serveur lequel compare la photo à une base préétablie de marques de certification et en retour informe le terminal mobile si la marque de certification est authentique ou non. Un inconvénient de cet art antérieur est d'être limité à un type d'objet à comparer à l'identique avec un ensemble de références contenues dans une base de données prédéfinie. Par ailleurs, la réponse est du type oui/non, elle est par conséquent relativement pauvre. Dès l'instant où l'objet n'est plus à comparer à l'identique avec un ensemble de références dans une base de données prédéfinie, cet art antérieur ne permet plus de renseigner l'utilisateur du terminal mobile sur l'objet contenu dans la photo.

L'invention propose que, en plus de la photo, l'utilisateur du terminal mobile, joigne une information complémentaire laquelle permet au serveur d'une part de distinguer dans la photo l'objet pertinent et donc d'être aidé dans la sélection d'une base de données adéquate et d'autre part de pouvoir éventuellement fournir à l'utilisateur du terminal mobile une réponse plus riche et plus adaptée à l'objet pertinent, c'est-à-dire l'objet qui intéresse l'utilisateur du terminal mobile. Sinon, une recherche de reconnaissance de forme totalement automatique sans la moindre information de la part de l'utilisateur conduirait le serveur à brasser un grand nombre de bases de données très vastes et à passer un temps excessif dans l'analyse de la photo. Ce petit effort de l'utilisateur du terminal mobile, qui est contraire à la recherche usuelle de procédés les plus automatisés possibles et les moins demandeurs d'effort de la part de l'utilisateur, sera très rentable en procurant à l'utilisateur du terminal mobile une réponse satisfaisante à l'aide de l'utilisation d'un niveau raisonnable de ressources ayant pour conséquence un temps de réponse et un coût global qui seront raisonnables. De plus, comme une photo a généralement un contenu riche et complexe, et que l'utilisateur du terminal mobile ne s'intéresse souvent qu'à un seul élément ou à tout le moins à un nombre limité d'éléments de cette photo, si l'utilisateur ne guide pas un petit peu le serveur, le serveur risque d'être obligé de poser un grand nombre de questions non pertinentes à l'utilisateur du terminal mobile avant de cibler le désir d'information de cet utilisateur, ce qui à la longue, ne peut manquer d'agacer l'utilisateur et de lui rendre ce service plus fastidieux qu'utile.

Selon l'invention, il est prévu un procédé comprenant : une étape d'envoi d'un terminal mobile vers un serveur d'au moins une photo ; une étape d'analyse, par le serveur, de la photo envoyée ; une étape d'association, à la photo analysée, d'au moins une information relative au contenu de la photo analysée ; une étape d'envoi, vers le terminal mobile, de l'information associée à la photo ou d'au moins une partie des informations associées à la photo ; caractérisé en ce que : le terminal mobile fournit au serveur une information complémentaire destinée à aider le serveur à identifier un sous-ensemble de la photo ; le serveur utilise l'information complémentaire pour identifier un sous-ensemble de la photo.

Dans une manière de réaliser l'identification, le serveur utilise d'abord l'information complémentaire pour repérer un sous-ensemble de la photo et le serveur identifie ensuite le sous-ensemble repéré, de préférence sans l'aide de l'information complémentaire, éventuellement avec l'aide de l'information complémentaire. Dans une autre manière de réaliser l'identification, le serveur simultanément repère et identifie un sous-ensemble de la photo, en utilisant l'information complémentaire.

De préférence, l'information complémentaire et la ou les photos sont les seules informations fournies au serveur par l'utilisateur du terminal mobile.

L'invention concerne également un terminal mobile ainsi qu'un serveur, particulièrement intéressants pour la mise en oeuvre du procédé selon l'invention. Le terminal mobile est de préférence un téléphone mobile.

Selon l'invention, il est aussi prévu un terminal mobile comprenant : un dispositif optique d'enregistrement d'au moins une photo ; un dispositif d'envoi de la photo vers un serveur ; un dispositif de réception d'au moins une information en provenance d'un serveur et relative au contenu de la photo envoyée ; caractérisé en ce que le terminal mobile comprend également un dispositif de saisie, distinct ou non du dispositif optique, par un utilisateur du terminal mobile d'une information complémentaire destinée à aider un serveur à identifier un sous-ensemble de la photo envoyée ; et en ce que le dispositif d'envoi est apte à envoyer l'information complémentaire vers un serveur.

Selon l'invention, il est encore prévu un serveur comprenant : un dispositif de réception d'une photo en provenance d'un terminal mobile ; un dispositif d'analyse de la photo reçue et d'association, à la photo analysée, d'au moins une information relative au contenu de la photo analysée ; un dispositif d'envoi, à un terminal mobile, de l'information associée à la photo ou d'au moins une partie des informations associées à la photo ; caractérisé en ce que : le dispositif de réception est apte à recevoir, d'un terminal mobile, une information complémentaire destinée à aider le serveur à identifier un sous-ensemble de la photo ; le dispositif d'analyse et d'association est apte à utiliser l'information complémentaire pour identifier un sous-ensemble de la photo.

L'invention sera mieux comprise et d'autres particularités et avantages apparaîtront à l'aide de la description ci-après et des dessins joints, donnés à titre d'exemples, où :

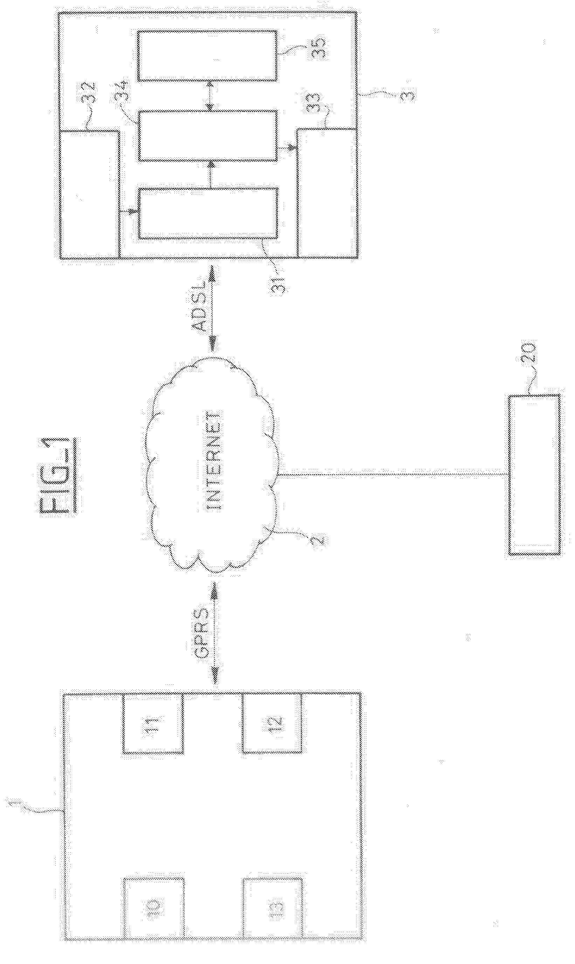

- la figure 1 représente schématiquement un exemple de système mettant en oeuvre le procédé selon l'invention.

La figure 1 représente schématiquement un exemple de système mettant en oeuvre le procédé selon l'invention. Un terminal mobile 1 est relié à un serveur 3 par l'intermédiaire d'un réseau de communication 2. Le réseau de communication 2 est un réseau de type Internet. Le terminal mobile 1 est un téléphone mobile relié au réseau 2 par une liaison par exemple de type GPRS (GPRS signifiant en langue anglo-saxonne « General Packet Radio Service »). Le serveur 3 est relié au réseau 2 par une liaison par exemple de type ADSL (ADSL signifiant en langue anglo-saxonne « Asymetric Data Subscriber Line »). Le terminal mobile 1 et le serveur 3 communiquent entre eux par l'intermédiaire du réseau 2. Le terminal mobile 1 comprend un dispositif optique 10 d'enregistrement d'au moins une photo, éventuellement d'un ensemble de photos constituant une vidéo, un dispositif de réception 11, un dispositif d'envoi 12, un dispositif de saisie 13. Le serveur 3 comprend un dispositif d'analyse 31, un dispositif de réception 32, un dispositif d'envoi 33, un dispositif d'association 34, une base 35 de données d'informations.

Le dispositif optique 10 d'enregistrement prend une photo. Une information complémentaire est saisie par l'utilisateur du terminal mobile 1 par l'intermédiaire du dispositif 13 de saisie. Le dispositif d'envoi 12 du terminal mobile 1 envoie la photo ainsi que l'information complémentaire qui sont reçues par le dispositif de réception 32 du serveur 3. Le dispositif 31 d'analyse analyse le contenu de la photo à l'aide de l'information complémentaire. Plus précisément, le dispositif 31 d'analyse identifie un sous-ensemble de la photo grâce à l'information complémentaire, en utilisant pour cela notamment des méthodes de reconnaissance de forme. Une fois le sous-ensemble identifié, le dispositif 34 d'association associe, éventuellement à l'aide de bases de données comportant des objets de référence, un objet au sous-ensemble identifié. Cet objet correspond au contenu du sous-ensemble identifié. Ensuite le dispositif 34 d'association associe une ou plusieurs informations à cet objet, par exemple soit à l'aide d'une base 35 de données interne au serveur 3 soit en échangeant des informations avec des bases de données externes 20 par l'intermédiaire du réseau 2 et à l'aide des dispositifs de réception 32 et d'envoi 33. La ou les informations associées à l'objet sont envoyées par le dispositif d'envoi 33 du serveur 3 et reçues par le dispositif de réception 11 du terminal mobile 1. L'utilisateur du terminal mobile 1 peut alors accéder aux informations associées à l'objet.

Dans un mode de réalisation, l'information complémentaire est sous forme de texte. C'est un message qui peut être un simple mot, par exemple « animal », qui est envoyé par le terminal mobile vers le serveur avec une photo. Le serveur analyse alors les différentes zones de la photo en cherchant un animal et finit par reconnaître par exemple dans une grosse zone jaune et brune située sur la photo un « lion ». Dans une option cette information complémentaire sous forme de texte est envoyée sous forme de SMS (SMS signifiant en langue anglo-saxonne « Short Message Service »). Dans une autre option, l'ensemble comprenant cette information complémentaire sous forme de texte et la photo est envoyé sous forme de MMS (MMS signifiant en langue anglo-saxonne « Multimedia Message Service »).

Dans un autre mode de réalisation, l'information complémentaire comprend un marquage graphique d'au moins une zone de la photo, permettant au serveur de repérer cette zone avant même de procéder à son identification. Par exemple, l'utilisateur a positionné un curseur sur la zone blanche de la photo indiquant ainsi au serveur ce qui l'intéresse dans la photo, à savoir une zone blanche correspondant par exemple à une statue représentant la « Victoire de Samothrace ». Dans un autre exemple, l'utilisateur a entouré la zone blanche, par exemple par un carré, indiquant ainsi au serveur que l'objet qui l'intéresse se trouve dans cette zone entourée qui contient la statue représentant la « Victoire de Samothrace ».

Dans un autre mode de réalisation, plusieurs photos sont envoyées par le terminal mobile vers le serveur sous forme de vidéo. L'information complémentaire comprend un message vocal inclus dans la bande sonore associée à la vidéo. Pendant que l'utilisateur filme un troupeau d'herbivores qui coure dans la savane lors d'un safari, il dit vocalement être intéressé par « l'animal aux longues cornes ». Le serveur identifie alors la zone correspondante sur la photo, cherche un animal par comparaison avec les éléments d'une base de données sur les animaux et reconnaît une antilope nommée « hippotrague noir ». Le serveur peut alors envoyer au terminal mobile le nom de l'animal « hippotrague noir » ainsi qu'une fiche technique détaillée sur l'animal.

Dans un autre mode de réalisation, l'information complémentaire comprend un message vocal envoyé par l'utilisateur du terminal mobile vers le serveur au cours d'une communication téléphonique entre le terminal mobile et le serveur. Ainsi toutes les informations contenues dans l'information complémentaire guident le serveur pour reconnaître rapidement et sans erreur un objet dans une photo au prix de faibles ressources. L'utilisateur envoie une photo en demandant par exemple quel est le « champignon d'aspect marron ». Le serveur détermine alors par exemple sans difficulté un cèpe, et dit par exemple à l'utilisateur que c'est un cèpe, qu'il est comestible et même délicieux à déguster en omelette.

Dans un autre mode de réalisation, l'information complémentaire comprend une réponse à un questionnaire à choix multiple proposé par le serveur au terminal mobile et permettant de guider l'utilisateur. Par exemple, la couleur de l'objet est-elle majoritairement verte, jaune, rouge ... ? L'objet est-il un végétal, animal, objet d'art ... ? L'objet est-il situé plutôt à droite, à gauche, en haut, bas ? Le serveur finit par reconnaître que la longue tâche sombre située à droite et qui représente un animal est une « murène ».

Dans un autre mode de réalisation, l'information complémentaire est fournie au travers d'une requête prédéterminée fournie par le serveur lequel demande certains renseignements à l'utilisateur.

Dans un autre mode de réalisation, l'information complémentaire peut avoir été donnée une fois pour toutes pour un certain intervalle de temps. Par exemple, « toute la journée, je suis au Musée du Louvre et je voudrais des informations sur les oeuvres d'art que contient ce Musée » ou bien « cette semaine je pars pour un safari au Kenya et je voudrais des informations sur tous les animaux que je vais rencontrer ». Par défaut, pendant la période de temps choisie, le serveur considérera toujours la même information complémentaire, ce qui rend encore plus facile l'utilisation du service proposé par le serveur par l'utilisateur du terminal mobile. Dans une option, l'utilisateur peut même avoir la possibilité de définir un profil d'utilisateur indiquant ses goûts, ses activités, ses intérêts, permettant de guider le serveur dans la détermination des objets contenus dans la photo fournie par l'utilisateur du terminal mobile.

Dans un type de réalisation, l'information complémentaire est envoyée par le terminal mobile simultanément à la photo. L'utilisateur du terminal mobile fournit un petit effort au départ et le serveur agit ensuite rapidement et efficacement. Dans un autre type de réalisation, l'information complémentaire est envoyée par le terminal mobile après une réponse du serveur suite à l'envoi de la photo. La réponse du serveur pourra donc guider l'utilisateur dans la manière de fournir l'information complémentaire. L'utilisateur a moins d'effort à fournir dans la mesure où il peut rester complètement passif ; toutefois cette façon de procéder sera un peu plus longue à cause de l'échange d'information entre le terminal mobile et le serveur. Ainsi, le serveur aura besoin d'un peu plus de temps pour obtenir l'information complémentaire dont il a besoin pour analyser la photo.

Dans une option préférentielle, le procédé comprend également : une étape d'envoi d'un conseil du serveur vers le terminal mobile ; une étape de prise d'au moins une photo supplémentaire par le terminal mobile, la photo supplémentaire étant prise dans des conditions différentes de la photo précédente, ces conditions différentes reflétant le conseil ; une étape d'envoi de la photo supplémentaire du terminal mobile vers le serveur. Le conseil peut consister par exemple en une demande de prendre une photo dans d'autres circonstances, par exemple « changer d'angle », « se rapprocher », « mettre le flash », « changer le zoom », si la première photo est insuffisante au serveur pour déterminer l'objet de manière satisfaisante pour l'utilisateur.

Dans une option préférentielle, les informations associées à la photo comprennent un plan d'action pour l'utilisateur du terminal mobile. Par exemple, l'utilisateur envoie la photo d'un serpent. Le serveur peut lui envoyer comme information le nom du serpent et le temps qu'il reste à l'utilisateur pour rallier un hôpital avant que le poison d'une morsure de ce serpent ait eu des effets irréversibles comme la mort de la victime par exemple. Avantageusement, le terminal selon l'invention peut être associé à un kit des principaux antidotes et l'utilisateur en réponse à sa photo du serpent reçoit par exemple l'information suivante : « en cas de morsure, injecter le contenu de la seringue n°3 immédiatement, puis rallier un hopital dans les deux heures ».

Dans une option préférentielle, une localisation du terminal mobile permet le choix d'un serveur géographiquement proche du terminal mobile. Ainsi, les communications sont moins coûteuses.

Dans une option préférentielle, une localisation du terminal mobile constitue au moins une partie de l'information complémentaire. Si par exemple, l'utilisateur du terminal mobile envoie une photo au serveur et si le serveur localise l'utilisateur comme étant au Musée du Louvre, le serveur sait que l'utilisateur va très probablement lui demander des informations sur une oeuvre d'art et peut par défaut analyser la photo en essayant directement de reconnaître l'une des oeuvres d'art du Musée du Louvre. Si par exemple, l'utilisateur du terminal mobile envoie une photo au serveur et si le serveur localise l'utilisateur comme étant au Zoo de Vincennes, le serveur sait que l'utilisateur va très probablement lui demander des informations sur un animal et peut par défaut analyser la photo en essayant directement de reconnaître l'un des animaux du Zoo de Vincennes. Par exemple, dans le cas d'une photo d'ours au Zoo de Vincennes, le serveur peut envoyer au terminal mobile des renseignements sur l'animal, tandis que dans le cas d'une photo d'ours prise dans un parc national des Etats-Unis, le serveur peut envoyer au terminal mobile, en plus de renseignements sur l'animal, des consignes de sécurité à observer puisque les ours y sont en liberté.

Dans une option préférentielle, les informations associées à la photo et envoyées par le serveur vers le terminal mobile se présentent sous la forme d'une page HTML, par exemple envoyée par mail.

Les applications du procédé selon l'invention peuvent être variées et peuvent concerner par exemple et de manière non limitative, la reconnaissance de champignons et l'indication de leur éventuelle comestibilité ou toxicité, la reconnaissance d'animaux et l'indication de leurs principaux caractères comme la taille, le poids, la période de gestation, le lieu d'habitat ..., la reconnaissance de serpent et l'indication de l'antidote à injecter en cas de morsure, la reconnaissance d'oeuvres d'art et de monuments et l'indication de leurs créateurs, de leurs époques ...

## Revendications

1. Procédé comprenant :
- une étape d'envoi d'un terminal mobile (1) vers un serveur (3) d'au moins une photo ;
- une étape d'analyse, par le serveur, de la photo envoyée ;
- une étape d'association, à la photo analysée, d'au moins une information relative au contenu de la photo analysée ;
- une étape d'envoi, vers le terminal mobile, de l'information associée à la photo ou d'au moins une partie des informations associées à la photo ;
**caractérisé en ce que** :
- le terminal mobile fournit au serveur une information complémentaire destinée à aider le serveur à identifier un sous-ensemble de la photo ;
- le serveur utilise l'information complémentaire pour identifier un sous-ensemble de la photo.

2. Procédé selon la revendication 1, **caractérisé en ce que** l'information complémentaire est sous forme de texte.

3. Procédé selon la revendication 2, **caractérisé en ce que** l'information complémentaire sous forme de texte est envoyée sous forme de SMS.

4. Procédé selon la revendication 2, **caractérisé en ce que** l'ensemble comprenant l'information complémentaire sous forme de texte et la photo est envoyé sous forme de MMS.

5. Procédé selon la revendication 1, **caractérisé en ce que** l'information complémentaire comprend un marquage graphique d'au moins une zone de la photo.

6. Procédé selon la revendication 1, **caractérisé en ce que** plusieurs photos sont envoyées par le terminal mobile vers le serveur sous forme de vidéo et **en ce que** l'information complémentaire comprend un message vocal inclus dans la bande sonore associée à la vidéo.

7. Procédé selon la revendication 1, **caractérisé en ce que** l'information complémentaire comprend un message vocal envoyé par l'utilisateur du terminal mobile vers le serveur au cours d'une communication téléphonique entre le terminal mobile et le serveur.

8. Procédé selon la revendication 1, **caractérisé en ce que** l'information complémentaire comprend une réponse à un questionnaire à choix multiple proposé par le serveur au terminal mobile.

9. Procédé selon l'une quelconque des revendications précédentes, **caractérisé en ce que** le procédé comprend également :
- une étape d'envoi d'un conseil du serveur vers le terminal mobile ;
- une étape de prise d'au moins une photo supplémentaire par le terminal mobile, la photo supplémentaire étant prise dans des conditions différentes de la photo précédente, ces conditions différentes reflétant le conseil ;
- une étape d'envoi de la photo supplémentaire du terminal mobile vers le serveur.

10. Procédé selon l'une quelconque des revendications précédentes, **caractérisé en ce que** les informations associées à la photo comprennent un plan d'action pour l'utilisateur du terminal mobile.

11. Procédé selon l'une quelconque des revendications précédentes, **caractérisé en ce qu'**une localisation du terminal mobile permet le choix d'un serveur géographiquement proche du terminal mobile.

12. Procédé selon l'une quelconque des revendications précédentes, **caractérisé en ce qu'**une localisation du terminal mobile constitue au moins une partie de l'information complémentaire.

13. Procédé selon l'une quelconque des revendications précédentes, **caractérisé en ce que** les informations associées à la photo et envoyées par le serveur vers le terminal mobile se présentent sous la forme d'une page HTML.

14. Procédé selon l'une quelconque des revendications précédentes, **caractérisé en ce que** l'information complémentaire est envoyée par le terminal mobile simultanément à la photo.

15. Procédé selon l'une quelconque des revendications 1 à 13, **caractérisé en ce que** l'information complémentaire est envoyée par le terminal mobile après une réponse du serveur suite à l'envoi de la photo.

16. Procédé selon l'une quelconque des revendications précédentes, **caractérisé en ce que** le serveur utilise d'abord l'information complémentaire pour repérer un sous-ensemble de la photo et **en ce que** le serveur identifie ensuite le sous-ensemble repéré.

17. Procédé selon l'une quelconque des revendications 1 à 15, **caractérisé en ce que** le serveur simultanément repère et identifie un sous-ensemble de la photo, en utilisant l'information complémentaire.

18. Procédé selon l'une quelconque des revendications précédentes, **caractérisé en ce que** l'information complémentaire et la ou les photos sont les seules informations fournies au serveur par l'utilisateur du terminal mobile.

19. Terminal mobile comprenant :
- un dispositif optique (10) d'enregistrement d'au moins une photo ;
- un dispositif d'envoi (12) de la photo vers un serveur ;
- un dispositif de réception (11) d'au moins une information en provenance d'un serveur et relative au contenu de la photo envoyée ;
**caractérisé en ce que** le terminal mobile comprend également un dispositif de saisie (13), distinct ou non du dispositif optique, par un utilisateur du terminal mobile d'une information complémentaire destinée à aider un serveur à identifier un sous-ensemble de la photo envoyée ;
et **en ce que** le dispositif d'envoi est apte à envoyer l'information complémentaire vers un serveur.

20. Serveur comprenant :
- un dispositif de réception (32) d'une photo en provenance d'un terminal mobile ;
- un dispositif (31 et 34) d'analyse de la photo reçue et d'association, à la photo analysée, d'au moins une information relative au contenu de la photo analysée ;
- un dispositif d'envoi (33), à un terminal mobile, de l'information associée à la photo ou d'au moins une partie des informations associées à la photo ;
**caractérisé en ce que** :
- le dispositif de réception est apte à recevoir, d'un terminal mobile, une information complémentaire destinée à aider le serveur à identifier un sous-ensemble de la photo ;
- le dispositif d'analyse et d'association est apte à utiliser l'information complémentaire pour identifier un sous-ensemble de la photo.
